# EUROPEAN PATENT APPLICATION

(11) **EP 1 679 712 A1**
(43) Date of publication of application: **12.07.2006**
(21) Application number: 04773610.3
(22) Date of filing: 29.09.2004
(51) Int. Cl.: G11B 27/00, G11B 20/12, G11B 20/10, G06F 12/00

(54) **RECORDING MEDIUM MANAGING APPARATUS AND RECORDING MEDIUM MANAGING METHOD**

(30) Priority: 01.10.2003 JP 2003343492
(71) Applicant: SONY CORPORATION, Tokyo 141-0001 (JP)
(72) Inventor: NONAKA, Chiaki Sony Corporation, Tokyo 141 (JP); DATE, Osamu Sony Corporation, Tokyo 141 (JP); TOSHIKAGE, Hideki Sony Corporation, Tokyo 141 (JP)
(74) Representative: Robinson, Nigel Alexander Julian
(86) International application number: PCT/JP2004/014670
(87) International publication number: WO 2005/034127

(57) **Abstract**

To enable identification information for identifying recording medium to be assigned only once to an area for recording a regular signal and manage a content item on the recording medium using this identification information.

Disk identification information can be recorded in a lead-in area of a disk 200. When a flag indicating whether or not disk identification information is recorded indicates that disk identification information is recorded, new disk identification information is prohibited from being recorded. A content management table 520 links and stores disk identification information and attribute information of content items. A menu generating unit 150 displays a menu based on the content management table 520. When a recording destination disk to be used for recording a content item is not loaded, the content item is stored in a suspended-content storing unit 540 until the recording destination disk is loaded.

## Description

### Technical Field

The present invention relates to a recording medium managing apparatus and a method of managing a recording medium and, more specifically, relates to a recording medium managing apparatus configured to manage a recording medium by assigning identification information to a recording medium, a method for managing a recording medium, and a program configured to execute the method by a computer.

### Background Art

When recording content items on a portable recording media, such as optical disks, management of the recording media is often time-consuming. In other words, the user is required to carry out a troublesome process of checking the menus of the recording media one by one in order to confirm the content items of each recording medium. This grows into a serious problem when the number of recording media owned by the user increases.

On the other hand, in order to manage recording media by a recording medium managing apparatus, some type of identification information must be assigned to the recording media so that each recording medium can be uniquely identified. For example, in case of a digital versatile disk (DVD), bar code stripes are provided in an area known as a burst cutting area (BCA) in the circumferential direction and closer to the center of the disk than the recording area of a signal. The BCA is used to record unique identification information for each disk (refer to, for example, Japanese Unexamined Patent Application Publication No. 10-228646 (Fig. 8)).

According to the above-described related art, for example, by using a BCA for a DVD, each DVD can be identified from each other.

However, such as the BCA, by providing a special area for identification on the inner side of the area used for recording a regular signal, the area provided for various content items will be decreased as reduction in size and increase in density for recording media are promoted, causing possible problems in the future. Moreover, it is assumed that identification information, such as the known BCA, is to be employed in a content-protection technology, such as Content Protection for Recordable Media (CPRM). Therefore, the convenience for regular users is not necessarily considered.

Accordingly, an object of the present invention is to manage content items of a recording medium by using identification information for identifying the recording medium, wherein the identification information is assigned only once to an area where regular signals are recorded.

An object of the present invention is to enable identification information for identifying recording medium to be assigned only once to an area for recording a regular signal and manage content items on the recording medium using this identification information.

### Disclosure of Invention

To solve the above-identified problems, a recording medium managing apparatus according to a first aspect of the present invention includes recording medium readout means for reading out recording information from a first area on a loaded recording medium, identification information supplying means for supplying identification information, recording medium writing means for prohibiting writing the identification information in a second area on the recording medium when first recording information indicates that the second area is used for recording and for writing the identification information in the second area and writing second recording information indicating that the second area is used for recording in the first area when the first recording information indicates that the second area is not used for recording, and management information storing means for storing management information linking identification information recorded in the second area and attribute information for content items of the recording medium recording the identification information, wherein the recording medium readout means updates management information of the management information storing means by reading out the identification information from the second area and reading out the attribute information from a third area on the recording medium when the recording information indicates that the second area is used for recording. In this way, identification information can be written in the second area only once, and this identification information and attribute information of content items are linked.

A recording medium managing apparatus according to a second aspect of the present invention is similar to the recording medium managing apparatus according to the first aspect of the present invention, except that the identification information supplying means includes apparatus information storing means for storing apparatus information unique to the recording medium managing apparatus and counting means for generating a unique serial number at the recording medium managing apparatus, and at least part of the identification information includes the apparatus information and the serial number. In this way, in the recording medium managing apparatus, unique identification information is assigned to each recording medium.

A recording medium managing apparatus according to a third aspect of the present invention is similar to the recording medium managing apparatus according to the first aspect of the present invention, except that the identification information supplying means includes character string inputting means for inputting a predetermined character string, and at least part of the identification information includes the character string input by the character string inputting means. In this way, a keyword that is associated with the content can be included in the identification information.

A recording medium managing apparatus according to a fourth aspect of the present invention is similar to the recording medium managing apparatus according to the first aspect of the present invention, except that the third area on the recording medium stores an index file including the attribute information, and the recording medium readout means reads out the attribute information from the index file and updates the management information of the management information storing means. In this way, attribute information related to content items on the recording medium can be easily obtained.

A recording medium managing apparatus according to a fifth aspect of the present invention is similar to the recording medium managing apparatus according to the first aspect of the present invention but further includes menu generating means for generating a menu displaying the attribute information of content items of the recording medium on the basis of the management information stored in the management information storing means. In this way, information related to the content items on the recording medium can be easily grasped.

A recording medium managing apparatus according to a sixth aspect of the present invention is similar to the recording medium managing apparatus according to the fifth aspect of the present invention but further includes character string inputting means for inputting a predetermined character string, and name conversion information storing means for storing name conversion information linking the identification information and a character string input by the character string inputting means, wherein the recording medium writing means updates the name conversion information of the name conversion information storing means when writing the identification information in the second area, and the menu generating means displays a character string together with the attribute information, the character string being linked to the identification information of the recording medium by the name conversion information. In this way, even when the identification information does not include a keyword, a name can be assigned to the recording medium.

A recording medium managing apparatus according to a seventh aspect of the present invention is similar to the recording medium managing apparatus according to the fifth aspect of the present invention but further includes instruction inputting means for assigning the content item to be played using the menu, wherein the recording medium readout means reads out the content item if the recording medium storing the assigned content item is loaded. In this way, the content item to be played can be assigned through a menu generated on the basis of management information stored in the management information storing means.

A recording medium managing apparatus according to a eighth aspect of the present invention is similar to the recording medium managing apparatus according to the seventh aspect of the present invention but further includes network connecting means for communicating with a network connecting another recording medium managing apparatus, wherein, if the recording medium storing the assigned content items is not loaded, the recording medium readout means inquires the other recording medium managing apparatus through the network connecting means whether or not the recording medium is loaded and, if the recording medium is loaded into the other recording medium managing apparatus, the recording medium readout means requests the transmission of the assigned content item. In this way, even when the required recording medium is not loaded, the content item can be sent from another recording medium managing apparatus connected to the network, and the content item can be played.

A recording medium managing apparatus according to a ninth aspect of the present invention is similar to the recording medium managing apparatus according to the first aspect of the present invention but further includes content-supplying means for supplying a content item, suspended-content-storing means for storing a content item suspended from being written in a recording medium, and suspension information storing means for storing suspension information linking identification information of a recording medium that is the recording destination of the suspended content item and attribute information of the suspended content item, wherein, if the recording medium that is the recording destination of the content item supplied from the content-supplying means is not loaded, the recording medium writing means stores the supplied content item in the suspended-content-storing means and updates the suspension information of the suspension information storing means. In this way, even if the recording destination recording medium is not loaded, a content item can be temporarily stored in the suspended content storing means.

A recording medium managing apparatus according to a tenth aspect of the present invention is similar to the recording medium managing apparatus according to the ninth aspect of the present invention, except that the recording medium readout means detects suspension information including the identification information read out from the second area from the suspension information storing means, and the recording medium writing means records the suspended content item stored in the suspended-content-storing means on the recording medium on the basis of the attribute information included in the detected suspension information and updates the management information of the management information storing means. In this way, a suspended content item stored in the suspended content storing means can be recorded in the original recording destination recording medium.

A recording medium managing apparatus according to an eleventh aspect of the present invention is similar to the recording medium managing apparatus according to the tenth aspect of the present invention but further includes network connecting means for communicating with a network connecting another recording medium managing apparatus, wherein the recording medium readout means inquires the other recording medium managing apparatus through the network connecting means whether or not the other recording medium managing apparatus stores the suspension information including the identification information read out from the second area and, if the suspension information is stored in the other recording medium managing apparatus, requests the transmission of the suspended content item related to the suspension information to the other recording medium managing apparatus, and the recording medium writing means records the suspended content item transmitted from the other recording medium managing apparatus or the recording medium and updates the management information of the management information storing means. When a suspended content item is stored in another recording medium managing apparatus, the suspended content item can be sent and recorded on the original recording destination recording medium.

A method of managing a recording medium for a recording medium managing apparatus including management information storing means for storing management information linking identification information and attribute information of content items of a recording medium recording the identification information according to a twelfth aspect of the present invention includes the steps of reading out recording information from a first area on a recording medium, receiving supplied identification information when the recording information indicates that the second area is not used for recording, writing the supplied identification information in the second area and writing recording information indicating that the second area is used for recording in the first area, and updating the management information of the management information storing means by reading out the identification information from the second area and reading out the attribute information from a third area on the recording medium when the recording information indicates that the second area is used for recording. In this way, identification information can be written in the second area only once, and the identification information and the attribute information of the content items can be linked.

A method of managing a recording medium for a recording medium managing apparatus including management information storing means for storing management information linking identification information and attribute information of content items of a recording medium recording the identification information, suspended-content-storing means for storing a content item suspended from being written in a recording medium, and suspension information storing means for storing suspension information linking the identification information of a recording medium that is the recording destination of the suspended content item and the attribute information of the suspended content item according to a thirteenth aspect of the present invention includes the method comprising the steps of reading out first recording information from a first area on the recording medium, receiving supplied identification information when the first recording information indicates that the second area is not used for recording, writing the supplied identification information in the second area and writing second recording information indicating that the second area is used for recording in the first area, receiving a instruction for recording a content item on an assigned recording medium, and storing the content item instructed to be recorded in the suspended-content-storing means and updating the suspension information of the suspension information storing means when the assigned recording medium is not loaded. In this way, even when the recording destination recording medium is not loaded, a content item can be temporarily stored in the suspended content storing means.

The method of managing a recording medium according to the fourteenth thirteenth aspect of the present invention is the same as that of the thirteenth aspect of the present invention but further includes the steps of reading out the identification information from the second area of a loaded recording medium, detecting the suspension information including the read out identification information from the suspension information storing means, and recording the suspended content item stored in the suspended-content-storing means on the recording medium on the basis of the attribute information including the detected suspension information and updating the management information of the management information storing means. In this way, the suspended content item stored in the suspended content storing means can be stored in the original recording destination recording medium.

The method of managing a recording medium according to the fifteenth thirteenth aspect of the present invention is the same as that of the thirteenth aspect of the present invention but further includes the steps of reading out the identification information from the second area of the loaded recording medium, inquiring another recording medium management apparatus whether or not the other recording medium management apparatus stores the suspension information including the identification information read out from the second area, requesting the transmission of the suspended content item related to the suspension information to the other recording medium management apparatus if the suspension information is stored in the other recording medium management apparatus, and recording the suspended content item sent from the other recording medium management apparatus on the loaded recording medium and updating the management information of the management information storing means. In this way, if a suspended content item is stored in another recording medium managing apparatus, the suspended content item can be sent and can be recorded on the original recording destination recording medium.

A program for a recording medium managing apparatus including management information storing means for storing management information linking identification information and attribute information of content items of a recording medium recording the identification information according to a sixteenth aspect of the present invention instructs a computer to execute the steps of reading out first recording information from a first area on a recording medium, receiving supplied identification information if the first recording information indicates that the second area is not used for recording, writing the supplied identification information in the second area and writing second recording information indicating that the second area is used for recording in the first area, and updating the management information of the management information storing means by reading out the identification information from the second area and reading out the attribute information from a third area on the recording medium when the first recording information indicates that the second area is used for recording. In this way, identification information can be written in the second area only once, and the identification information and the attribute information of the content items can be linked.

A program for a recording medium managing apparatus including management information storing means for storing management information linking identification information and attribute information of content items of a recording medium recording the identification information, suspended-content-storing means for storing a content item suspended from being written in a recording medium, and suspension information storing means for storing suspension information linking identification information of a recording medium that is the recording destination of the suspended content item and attribute information of the suspended content item according to a seventeenth aspect of the present invention instructs a computer to execute the steps of reading out first recording information from a first area on a recording medium, receiving supplied identification information when the first recording information indicates that the second area is not used for recording, writing in the supplied identification information in the second area and writing in second recording information indicating that the second area is used for recording in the first area, receiving an instruction of recording a content item to an assigned recording medium, and storing the content item instructed to be recorded in the suspended content item storing means and updating the suspension information of the suspension information storing means when the assigned recording medium is not loaded. In this way, even when the recording destination recording medium is not loaded, a content item can be temporarily stored in the suspended content storing means.

### Brief Description of the Drawings

Fig. 1 illustrates an example structure of a disk managing apparatus 100 according to an embodiment of the present invention.
Fig. 2 illustrates an example data structure of a disk 200 according to an embodiment of the present invention.
Figs. 3A, 3B, and 3C illustrate example configurations of disk identification information 214 according to an embodiment of the present invention.
Fig. 4 illustrates an example structure of a disk-name conversion table 510 according to an embodiment of the present invention.
Fig. 5 illustrates an example structure of an index file 310 according to an embodiment of the present invention.
Fig. 6 illustrates an example structure of a content management table 520 according to an embodiment of the present invention.
Fig. 7 illustrates an example menu display by a menu generating unit 150 according to an embodiment of the present invention.
Fig. 8 illustrates an example structure of a suspended-content management table 530 according to an embodiment of the present invention.
Fig. 9 illustrates an example screen display promoting the assignment of a recording destination disk according to an embodiment of the present invention.
Fig. 10 illustrates an example screen display confirming the recording of a suspended content item to a disk according to an embodiment of the present invention.
Fig. 11 illustrates an example process of assigning disk identification information according to an embodiment of the present invention.
Fig. 12 illustrates an example process of instructing the playing of a content item according to an embodiment of the present invention.
Fig. 13 illustrates an example process of instructing the recording of a content item according to an embodiment of the present invention.
Fig. 14 illustrates an example process for recording a suspended content item according to an embodiment of the present invention.
Fig. 15 illustrates another example structure of the disk managing apparatus 100 according to an embodiment of the present invention.
Fig. 16 illustrates another example structure of the disk managing apparatus 100 according to an embodiment of the present invention.
Fig. 17 illustrates an example process of instructing the playing of a content item according to a variation of an embodiment of the present invention.
Fig. 18 illustrates an example process of instructing the recording of a content item according to a variation of an embodiment of the present invention.
Fig. 19 illustrates an example process for recording a suspended content item according to a variation of an embodiment of the present invention.

### Best Mode for Carrying Out the Invention

Next, an embodiment of the present invention will be described with reference to the drawings.

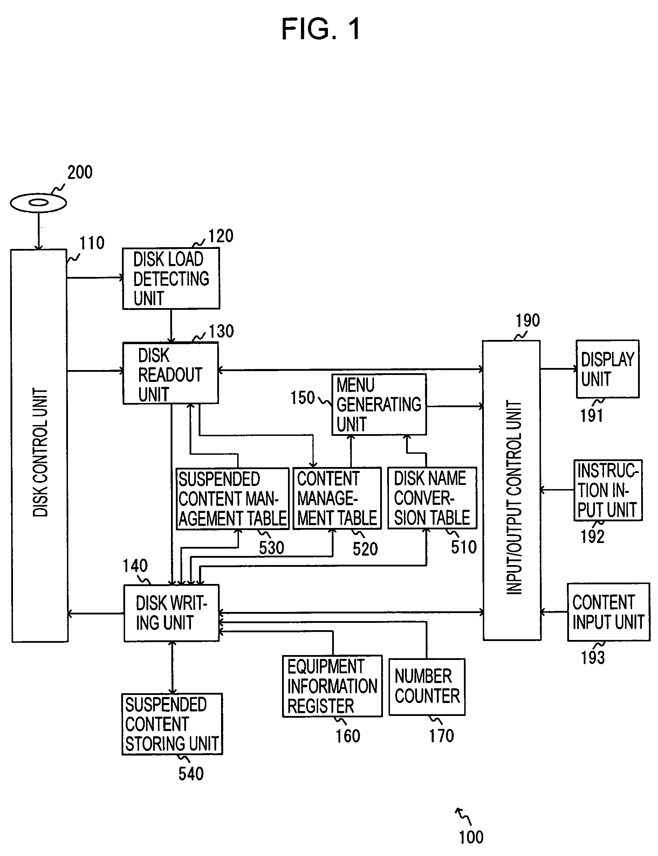

Fig. 1 illustrates an example structure of a disk managing apparatus 100 according to this embodiment of the present invention. This disk managing apparatus 100 includes a disk control unit 110, a disk-load detecting unit 120, a disk readout unit 130, a disk writing unit 140, a menu generating unit 150, an equipment information register 160, a number counter 170, an input/output control unit 190, a display unit 191, an instruction input unit 192, a content input unit 193, a disk-name conversion table 510, a content management table 520, a suspended-content management table 530, and a suspended-content storing unit 540.

The disk control unit 110 controls the access to a disk 200, which is a recording medium, and reads out and writes in data on the disk 200 by moving a pickup with a servo circuit (not shown in the drawing). More specifically, data read out from the disk 200 is supplied to the disk readout unit 130, and data input from the disk writing unit 140 is written in the disk 200.

The disk-load detecting unit 120 detects whether or not the disk 200 is loaded into a disk loading slot (not shown in the drawing) of the disk managing apparatus 100. If the disk-load detecting unit 120 detects that a new disk 200 is loaded, the disk-load detecting unit 120 notifies the disk readout unit 130. In this way, the loading of the disk 200 triggers a predetermined operation.

The disk readout unit 130 reads out data from the disk 200 via the disk control unit 110. The disk readout unit 130 updates the content management table 520 in response to the content read out from the disk 200. Moreover, the disk readout unit 130 searches the suspended-content management table 530 in accordance with the content read out from the disk 200.

The disk writing unit 140 writes data in the disk 200 via the disk control unit 110 and updates the content management table 520. Also, the disk writing unit 140 updates the disk-name conversion table 510. Moreover, the disk writing unit 140 stores data in the suspended-content storing unit 540 when the disk 200, which is the writing destination, is not loaded and updates the suspended-content management table 530.

The menu generating unit 150 refers to the content management table 520 and generates a menu that displays information related to content items of the disk. At this time, the disk-name conversion table 510 is referred to whenever required.

The equipment information register 160 is a register for storing information related to the disk managing apparatus 100 and, for example, stores a manufacturer name, equipment code, and a manufacturer's number. The number counter 170 generates a serial number for the disk managing apparatus 100. The equipment information register 160 and the number counter 170 are used to generate disk identification information to be assigned to a disk.

The input/output control unit 190 functions as an interface between the inside of the disk managing apparatus 100 and the display unit 191, the instruction input unit 192, and the content input unit 193. The display unit 191 is a display for displaying text, still images, and moving images and, for example, is a liquid crystal display (LCD). The instruction input unit 192 is used by the user to input an instruction and, for example, is a keyboard or a button. The content input unit 193 is used to input content items to be recorded on the disk 200 from the outside of the disk managing apparatus 100.

The disk-name conversion table 510 is a table for converting the disk name assigned by the user into disk identification information. The content management table 520 is a table for linking the disk identification information and the information related to the content items. The disk-name conversion table 510 and the content management table 520 can be realized by, for example, a non-volatile memory.

The suspended-content storing unit 540 is used for temporarily storing content items when the disk 200, which is the writing destination, is not loaded and may be realized by, for example, a hard disk or a non-volatile memory. The suspended-content management table 530 is a table for linking information related to the content items stored in the suspended-content storing unit 540 and identification information of the writing destination. This suspended-content management table 530 can be realized by, for example, a non-volatile memory.

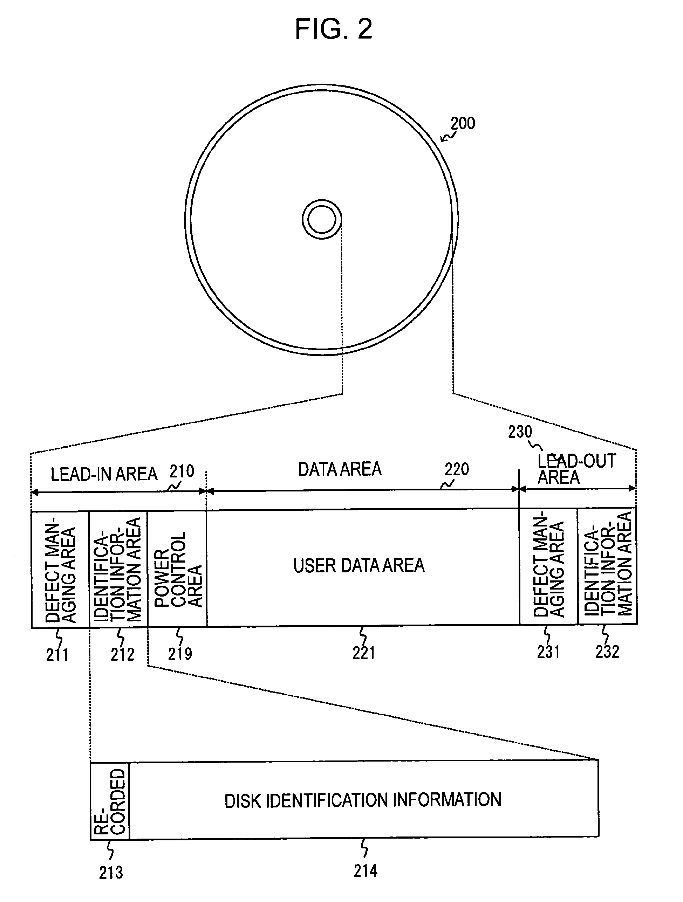

Fig. 2 illustrates an example data structure of the disk 200 according to this embodiment of the present invention. In the recording area of the disk 200, a lead-in area 210, a data area 220, and a lead-out area 230 are disposed in this order from the inner circumference side of the disk 200.

The lead-in area 210 includes a defect management area (DMA) 211, an identification information area 212, and an optimum power control area (OPC) 219. The defect management area 211 is an area for recording a data structure for managing a replacement area corresponding to a defective area on the disk. The identification information area 212 is an area for recording identification information of a disk. The optimum power control area 219 is an area used for test-writing carried out for adjusting the optimum power for playing. Even if disks are made by the same manufacturer, the characteristics thereof may slightly differ. By carrying out test-writing in this optimum power control area 219, optimum power for each disk can be finely adjusted.

The data area 220 includes a user data area 221 for recording user data. In the user data area 221, other content items, such as an index file, as described below, are recorded.

The lead-out area 230 is an area provided so that the position of the pickup does not move out from the outer circumference of the disk. By using such a lead-out area 230, the defect management area 211 and the identification information area 212 can be stored as back-ups of a defect management area 231 and an identification information area 232, respectively.

The identification information area 212 includes a recording flag 213 and disk identification information 214. The recording flag 213 indicates whether or not a valid value is recorded in the disk identification information 214. If the recording flag 213 indicates "recorded," the disk identification information 214 is prohibited from receiving a new recording. The disk identification information 214 is an area for recording unique identification information for each disk. This disk identification information 214 may be recorded when the disk is manufactured, or a set disk identification information may be recorded when the disk is used. Since the above-described recording flag 213 is set to "recorded" when a valid value is recorded in this disk identification information 214, disk identification information is recorded in the disk identification information 214 only once.

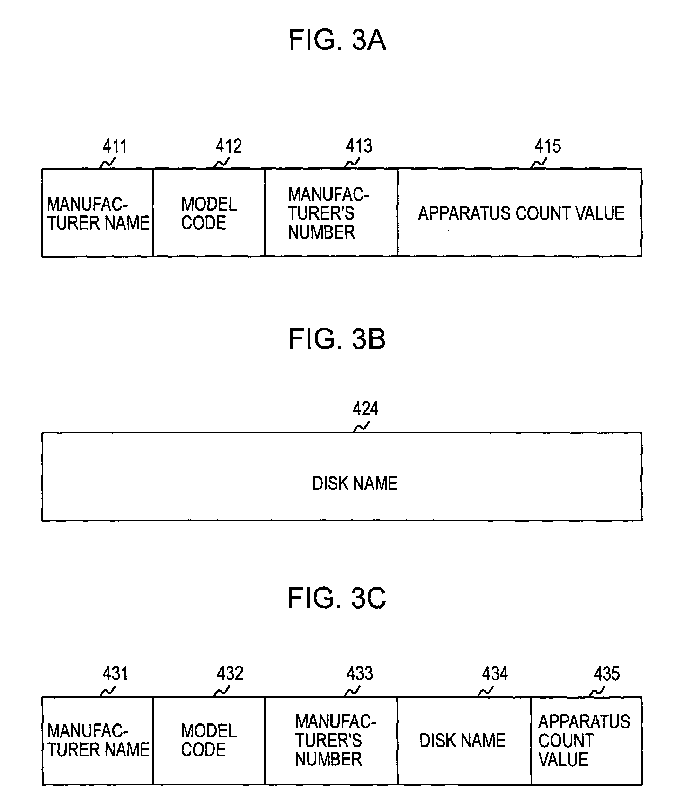

Figs. 3A to 3C illustrate example structure of the disk identification information 214 according to this embodiment of the present invention. The example structure illustrated in Fig. 3A includes a manufacturer name 411, a model code 412, a manufacturer's number 413, and an apparatus count value 415. The manufacturer name 411 is the name of the manufacturer. The model code 412 is a code indicating the type of the apparatus assigned to the disk identification information 214 for each model. The manufacturer's number 413 is a unique number assigned to each apparatus. For apparatuses that are the same model, different manufacturer's numbers 413 are assigned. The apparatus count value 415 is a series of numbers generated by each apparatuses.

Among these items, the manufacturer name 411, the model code 412, and the manufacturer's number 413 can be stored in the equipment information register 160. The apparatus count value 415 can be generated by counting carried out at the number counter 170. In other words, according to the example structure in Fig. 3A, the apparatus count value 415 can be automatically generated in the disk managing apparatus 100.

According to the example structure in Fig. 3B, the disk identification information is constituted of only a disk name 424. The disk name 424 is an arbitrary character string input by the instruction input unit 192. Actually, this character string is recorded as a predetermined character code, such as an ASCII code. According to the example structure in Fig. 3B, this character code can be converted back into the original character string when displaying the disk identification information in a menu. This is advantageous in that the disk identification information is easily visible for the user. However, as shown in the example structure in Fig. 3B, if all fields of the disk identification information are disclosed to the users, the same disk identification information may be assigned to different disks, causing a problem in that proper identification cannot be carried out.

Consequently, the example structure in Fig. 3C combines Figs. 3A and 3B and includes the a manufacturer name 431, a model code 432, a manufacturer's number 433, a disk name 434, and an apparatus count value 435. As this example structure in Fig. 3C, by allowing an arbitrary character string to be recorded as part of the disk identification information, the disk identification information can be easily visible by the user while maintaining the ability of identifying the disk.

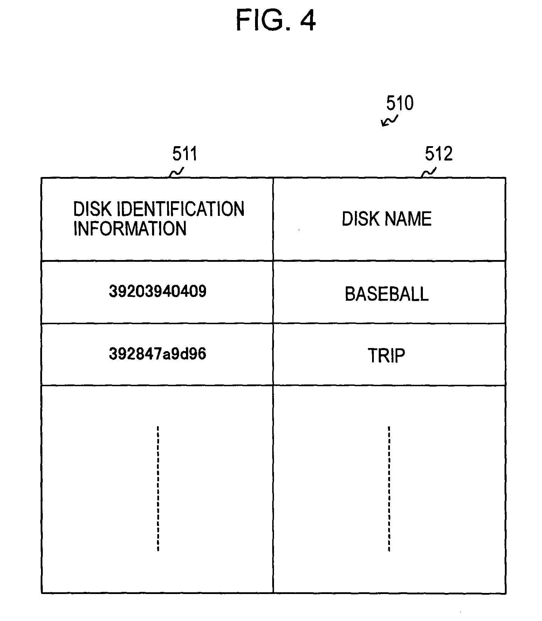

Fig. 4 illustrates an example structure of a disk-name conversion table 510 according to this embodiment of the present invention. The disk-name conversion table 510 stores disk name conversion information linking disk identification information 511 and a disk name 512. The disk-name conversion table 510 is provided to increase the user's visibility when, as shown in the example structure in Fig. 3A, the disk identification information may be perceived by the user as a meaningless string of numbers.

For example, as shown in the drawing, if the disk identification information 511 is a string of numbers "39203940409," a character string "BASEBALL" is assigned instead as the disk name 512. In this way, when information related to this disk is displayed in a menu, a disk name, which is easily visible, can be used instead of the original disk identification information.

In the example structure in Fig. 3B, to avoid the same disk identification information to be assigned to different disks, the disk identification information 511 of the disk-name conversion table 510 can be used. More specifically, each time new disk identification information is input from the instruction input unit 192, the disk identification information 511 is searched and only when matching disk identification information is not detected, the use of this new disk identification information may be approved.

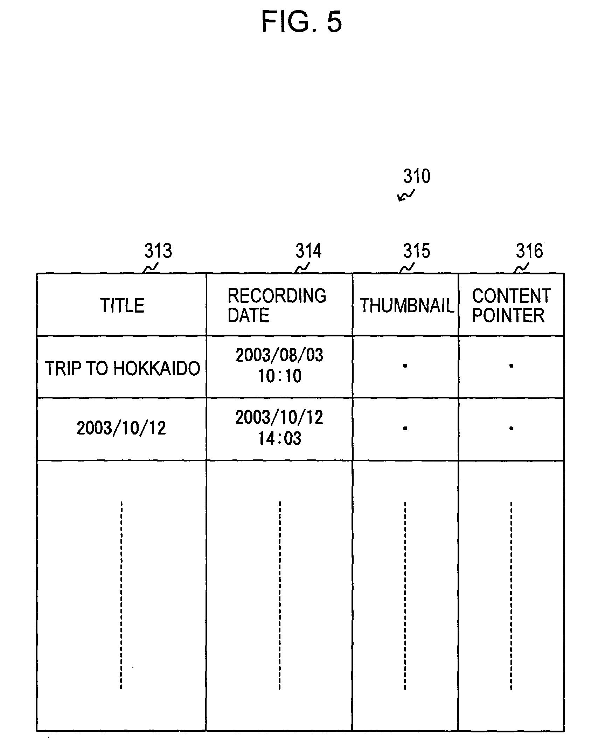

Fig. 5 illustrates an example structure of an index file 310 according to this embodiment of the present invention. As described above, the index file 310 including content items and information related to these content items is recorded in the user data area 221. This index file 310 stores information, such as a title 313, a recording date 314, a thumbnail 315, and a content pointer 316, for each of the content items recorded on the disk.

A predetermined character string may be used as the title 313. Instead, for example, the user may input the title 313 during or after recording, or date data may be automatically assigned as the title 313 during recording. The date data can also be used for the recording date 314. Moreover, the program name may be automatically assigned by using an electronic program guide (EPG).

The thumbnail 315 is an image representation of each content item and, for example, if the content item is a MPEG-compressed content item, the first I picture may be reduced in size and used as a thumbnail. The thumbnail may be directly stored as the thumbnail 315 or, instead, the actual thumbnail may be recorded in a separate file and the thumbnail 315 may indicate the location of this file.

The content pointer 316 is a pointer indicating the recording location of each content item. By following this content pointer 316, the actual content item can be accessed.

The index file 310 includes information related to each content item recorded on the disk and is useful for speeding up processing time. More specifically, the index file 310 is advantageous in that, when a new disk is loaded into the disk managing apparatus 100, the information related to the content items recorded on the disk can be instantly obtained without checking the all content items of the disk.

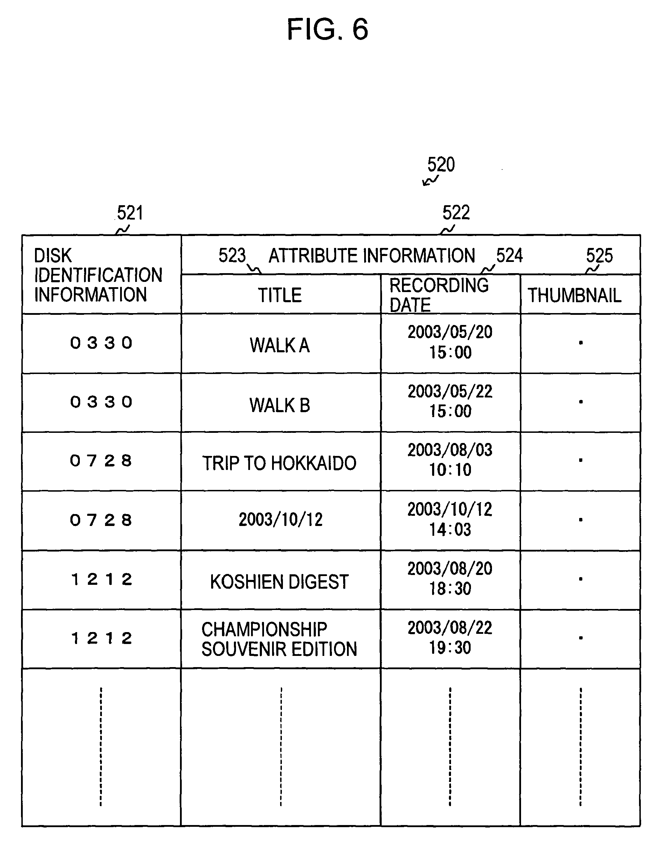

Fig. 6 illustrates an example structure of the content management table 520 according to this embodiment of the present invention. The content management table 520 stores attribute information 522 for the content items corresponding to disk identification information 521. As this attribute information 522, for example, a title 523, a recording date 524, and a thumbnail 525 may be stored. The title 523, the recording date 524, and the thumbnail 525 correspond to the title 313, the recording date 314, and the thumbnail 315, respectively, of the above-described index file 310.

The attribute information 522 is recorded in the content management table 520 at two different timings as described below. As a first timing, when the disk-load detecting unit 120 detects that a disk is loaded, the disk readout unit 130 reads out the disk identification information from the disk, then reads out the attribute information of the content items from, for example, the index file 310, and then, if the corresponding content items are not recorded in the content management table 520, management information linking the disk identification information and the attribute information is added to the content management table 520. As a second timing, when the disk writing unit 140 records a new content item on the disk, management information linking the disk identification information of the recording destination disk and the attribute information of the content item is added to the content management table 520. In this way, the content management table 520 reflects information related to the content items recorded on the disk.

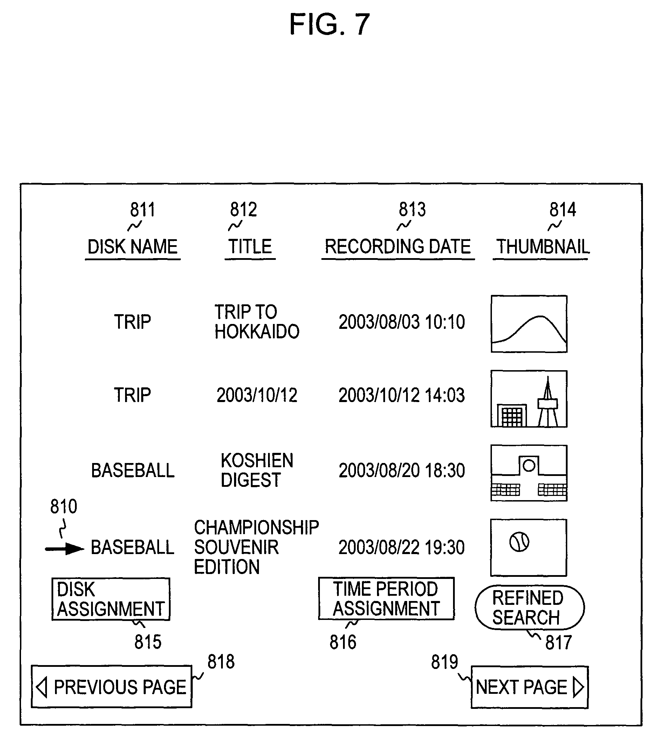

Fig. 7 illustrates an example of a menu display generated by the menu generating unit 150 according to this embodiment of the present invention. The menu display is displayed on the display unit 191 according to an instruction from the instruction input unit 192 and includes a disk name 811, a title 812, a recording date 813, and a thumbnail 814 for each content item. For the disk name 811, the disk identification information may be directly displayed or a disk name converted by the disk-name conversion table 510 may be displayed. The title 812, the recording date 813, and the thumbnail 814 are displayed based on the title 523, the recording date 524, and the thumbnail 525 of the content management table 520.

The menu display may be displayed over a plurality of pages depending on the number of content items to be displayed, and a predetermined page can be displayed by pressing a previous page button 818 or a next page button 819. The order of displaying the content items may be sorted by the type of each item. By assigning the columns for the disk name 811, the title 812, or the recording date 813, the content items are sorted by order according to the disk name, the title, or the recording date. By assigning the disk name 811 of at least one predetermined disk to a disk assignment box 815 and pressing a refined-search button 817, the result of the a refined search is displayed. By assigning a predetermined period for the recording date 813 to a time period assignment box 816 and pressing the refined-search button 817, the result of the refined search is displayed. In the example shown in Fig. 7, the content items of the disks are sorted by the recording date. Here, if "2003/08/03-2003/08/22" is assigned to the time period assignment box 816, the content item titled "2003/10/12" on the disk named "TRIP" will not be displayed in this menu.

In this menu display, a predetermined content item can be selected using a selection pointer 810 and the selected content item can be assigned to be played. As shown in the drawing, when the disk "BASEBALL" is selected, if the disk "BASEBALL" is loaded into the disk managing apparatus 100, the content item titled "CHAMPIONSHIP SOUVENIR EDITION" will be played. However, if the disk is not loaded, the content item is not played or a message instructing the user to load the disk "BASEBALL" will be displayed.

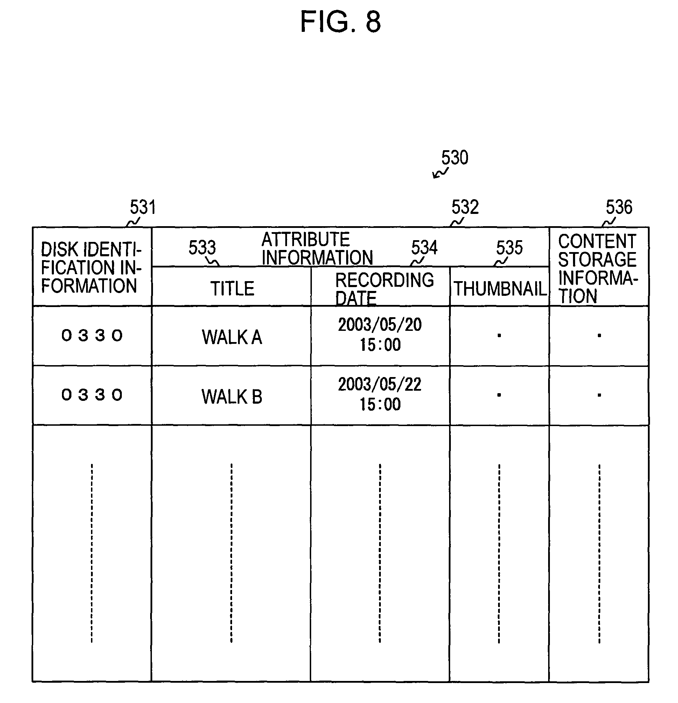

Fig. 8 illustrates an example structure of the suspended-content management table 530 according to this embodiment of the present invention. As described above, when the disk 200, which is the recording destination of the content items, is not loaded, the content items are temporarily stored in the suspended-content storing unit 540. Information related to the content items stored in the suspended-content storing unit 540 is stored in the suspended-content management table 530. The suspended-content management table 530 stores attribute information 532 and content item storage information 536 corresponding to disk identification information 531 corresponding to the writing destinations of the content items.

As the attribute information 532, for example, a title 533, a recording date 534, and a thumbnail 535 are stored. The title 533, the recording date 534, and the thumbnail 535 correspond to the title 313, the recording date 314, and the thumbnail 315, respectively, on the index file 310 described above. The content storage information 536 indicates the storage location in the suspended-content storing unit 540.

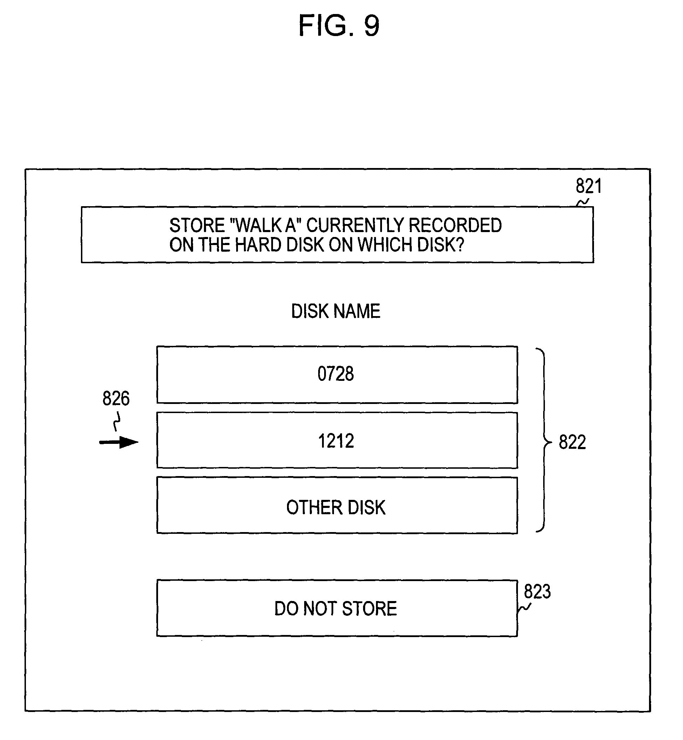

When the disk writing unit 140 stores a suspended content item in the suspended-content storing unit 540, suspension information linking the disk identification information of the recording destination disk, attribute information of the suspended content items, and content item storage information are added to the suspended-content management table 530. The assignment of the recording destination disk is promoted by a display such as that shown in Fig. 9 below.

Fig. 9 illustrates an example display of a screen promoting the assignment of a recording destination disk according to an embodiment of the present invention. When the user is to record a content item on a disk and the disk that is the recording destination is not available, the content item is temporarily recorded on the suspended-content storing unit 540. Then, later when the recording destination disk is available, the content item is recorded on the recording destination disk from the suspended-content storing unit 540. In the example shown in Fig. 9, when a content item titled "WALK A" is recorded on a hard disk functioning as the suspended-content storing unit 540, a message 821 promoting the assignment of the recording destination disk is displayed. In this example, the recording destination disk is assigned after recording the content item in the suspended-content storing unit 540. However, the content item may be recorded in the suspended-content storing unit 540 after the recording destination disk is assigned.

The user can assign the recording destination disk by selecting a predetermined disk from a list 822 of disk names with the refined-search button 817. To discard the content item recorded on the hard disk, functioning as the suspended-content storing unit 540, without recording this content item on any other disk, a button 823 for discarding the content information is pressed.

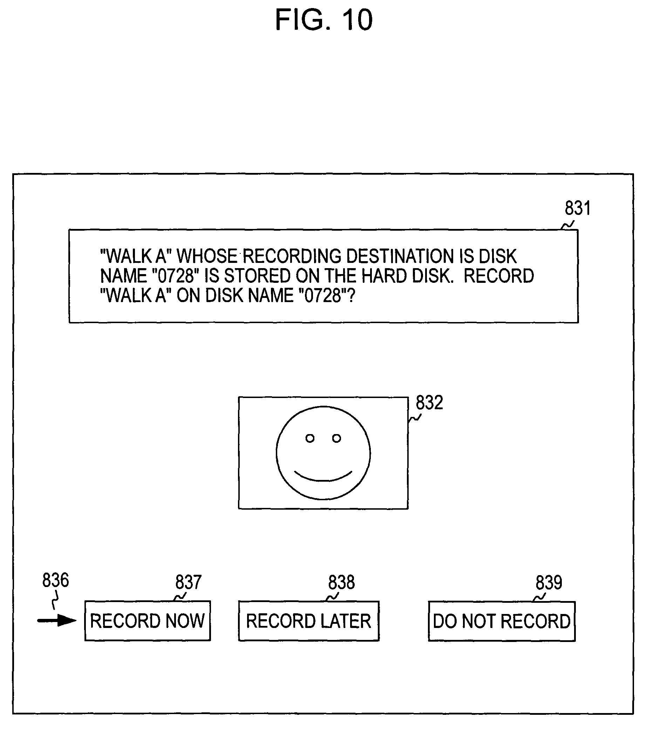

Fig. 10 illustrates an example screen for confirming the recording of a suspended content item on a disk according to this embodiment of the present invention. According to this example, a message 831 for confirming whether or not to record the suspended content item titled "WALK A" on the disk "0728" when the disk "0728" is assigned as the recording destination disk, in the example shown in Fig. 9, is displayed. Furthermore, a thumbnail 832 is displayed to show the suspended content item.

The recording confirmation message of the suspended content item is displayed when a disk is loaded. The user can instruct whether or not to record the suspended content item on the disk "0728" by using the refined-search button 817 to select a button 837 for immediately executing recording, a button 838 for recording later, or a button 839 for prohibiting recording.

If the button 837 is selected, recording is immediately executed. However, the user may not want to immediately execute the recording. In other words, the user may want to start playing the loaded disk immediately and record the suspended content item later. Furthermore, for a battery-powered portable disk managing apparatus, it might not be desirable to record the suspended content item to conserve power consumption when the apparatus is powered by a battery. In such cases, the recording of the suspended content item can be postponed by selecting the button 838. Here, the timing for start recording the suspended content item may be, for example, when programmed recording using the above-mentioned EPG is not scheduled or, in case for a portable disk managing apparatus, when the battery is charged. For the portable disk managing apparatus, if the user selects the button 837 for executing immediate recording, it is desirable to promote connection with an AC adaptor.

Next, the operation of the disk managing apparatus 100 according to this embodiment of the present invention will be described with reference to the drawings.

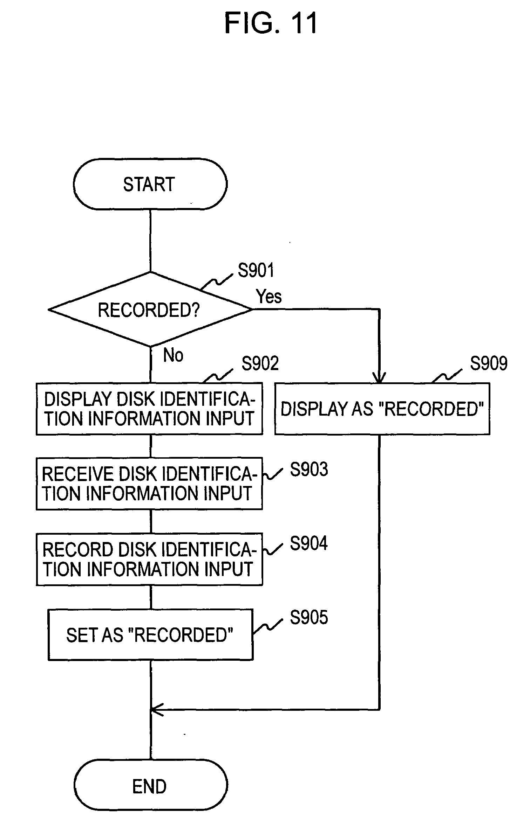

Fig. 11 illustrates an example process for assigning disk identification information according to this embodiment of the present invention. First, the recording flag 213 is read out from the loaded disk 200. Then, if the recording flag 213 indicates that the disk identification information is recorded (Step S901), a message indicating that "new disk identification information cannot be recorded on the disk because disk identification information is already recorded on the loaded disk" will be displayed (Step S909).

If, in Step S901, the recording flag 213 indicates that disk identification information is not recorded, a message promoting the input of disk identification information is displayed on the display unit 191 (Step S902). When disk identification information is input by the instruction input unit 192 (Step S903), the disk identification information is recorded in the disk identification information 214 of the disk 200 (Step S904). Then, the recording flag 213 indicates that disk identification information is recorded (Step S905).

Here, the format for the disk identification information is assumed to be that illustrated in Fig. 3B or 3C, and the input of disk identification information is promoted in Step S902. However, if the assumed format is that illustrated in Fig. 3A, the input of disk identification information will not be required.

The process in Fig. 11, for example, is executed when the instruction input unit 192 instructs the assignment of disk identification information. The process in Fig. 11 may instead be executed when loading of a new disk is detected by the disk-load detecting unit 120. In such a case, when it is determined in Step S901 that disk identification information is recorded, the fact that disk identification information is recorded does not necessarily have to be displayed in Step S909.

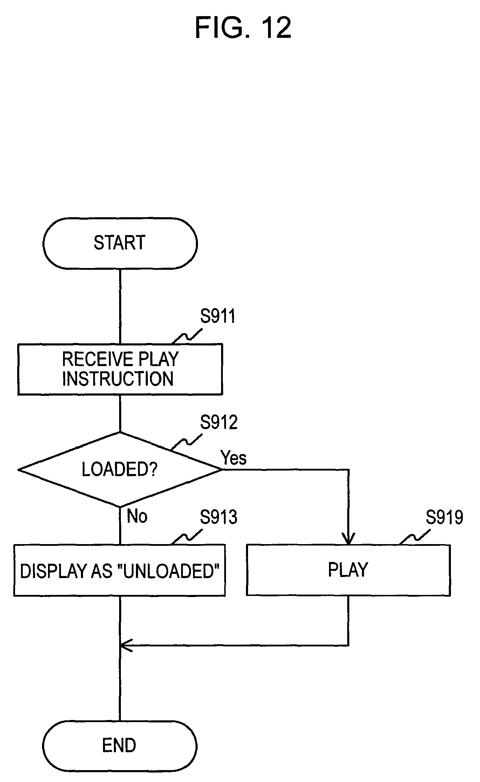

Fig. 12 illustrates an example process in response to a content play instruction according to this embodiment of the present invention. First, when playing of a content item is assigned by the instruction input unit 192 (Step S911), the content management table 520 is searched and it is determined whether or not a disk that is identifiable by the disk identification information 521 is loaded (Step S912).

If, in Step S912, it is determined that the disk recording the assigned content item is loaded, the assigned content item is read out from the disk and played (Step S919), whereas, if, in Step S912, it is determined that the disk recording the assigned content item is not loaded, a message indicating that the disk in interest is not loaded (Step S913). The process in Fig. 12 is executed, for example, when a play instruction is input from the instruction input unit 192 through a menu display such as that shown in Fig. 7.

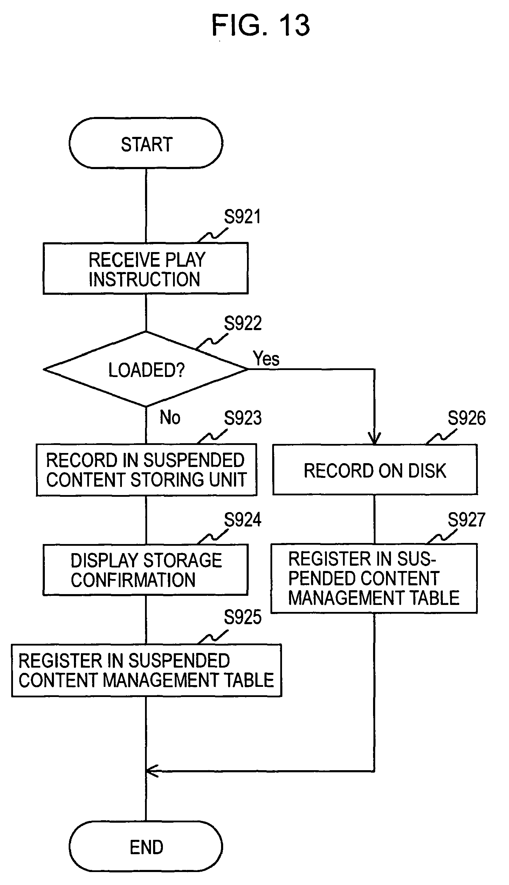

Fig. 13 illustrates an example process corresponding to a content item recording instruction according to this embodiment of the present invention. First, when a content item recording instruction is input from the instruction input unit 192 (Step S921), it is determined whether or not a disk is loaded into the disk managing apparatus 100 (Step S922).

If, in Step S922, it is determined that a disk is loaded, the content item input from the content input unit 193 is recorded on the disk (Step S926). Then, attribute information related to this content item is recorded as the attribute information 522 in the content management table 520 together with the disk identification information 521 (Step S927).

On the other hand, if, in Step S922, it is determined that a disk is not loaded, the content item input from the content input unit 193 is recorded on the suspended-content storing unit 540 (Step S923). Then, a message, such as that shown in Fig. 9, promoting the input of disk identification information of the recording destination disk is displayed on the display unit 191 (Step S924). The input of disk identification information may be carried out before recording the content item. The disk identification information input in this way is recorded as the disk identification information 531 in the suspended-content management table 530 together with the attribute information 532 and the content storage information 536 (Step S925).

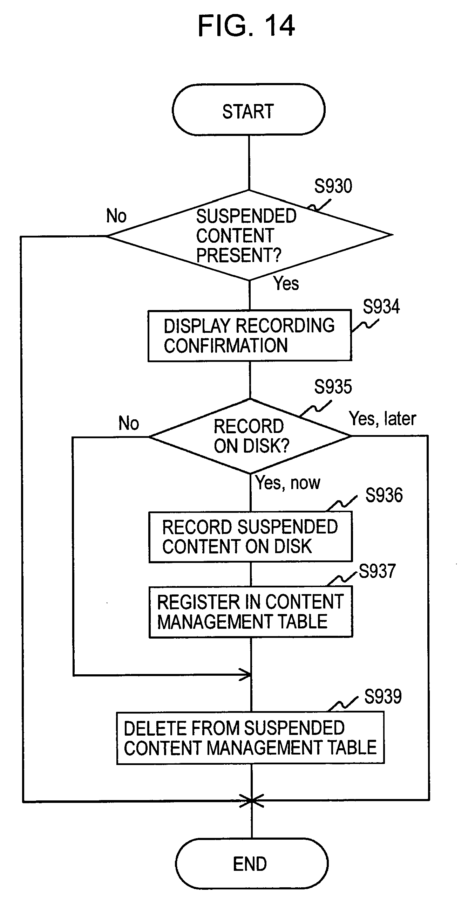

Fig. 14 illustrates an example process of recording a suspended content item according to this embodiment of the present invention. First, when the loading of a new disk is detected by the disk-load detecting unit 120, the disk identification information 214 is read out from this disk 200 and, based on the disk identification information 214, the suspended-content management table 530 is searched. In other words, it is determined whether or not the suspended content item whose recording destination disk is the disk identified by the disk identification information 214 is stored in the suspended-content storing unit 540 (Step S930). If it is determined that the suspended content item is stored, a message such as that shown in Fig. 10, confirming the recording on the recording destination disk is displayed on the display unit 191 (Step S934).

When it is confirmed that the suspended content item is to be immediately recorded on the recording destination disk (Step S935), the suspended content item is read out from the suspended-content storing unit 540 and is recorded on the recording destination disk (Step S936). The attribute information related to the recorded content item is recorded in the content management table 520 together with the disk identification information 521 provided as the attribute information 522 (Step S937).

When the recording on the recording destination disk is completed or when it is confirmed that the content item is not to be recorded on the disk and is discarded (Step S935), suspension information related to the corresponding suspended content item is deleted from the suspended-content management table 530 (Step S939).

If, in Step S935, it is confirmed that recording is to be carried out later, the processing for Steps S936 to S939 are suspended and are executed at a predetermined timing. This timing may be, as described above, when programmed recording using the above-mentioned EPG is not scheduled or, in case for a portable disk managing apparatus, when the battery is charged.

In this way, according to this embodiment of the present invention, disk identification information can be assigned only once by allowing the disk identification information 214 to be recorded in the lead-in area 210 of the disk 200 and by recording the recording flag 213 indicating whether or not the disk identification information 214 is already recorded. Accordingly, by linking and storing this disk identification information and the attribute information of the content items in the content management table 520, the content items on the disk can be easily managed.

Next, a variation according to this embodiment of the present invention will be described with reference to the drawings.

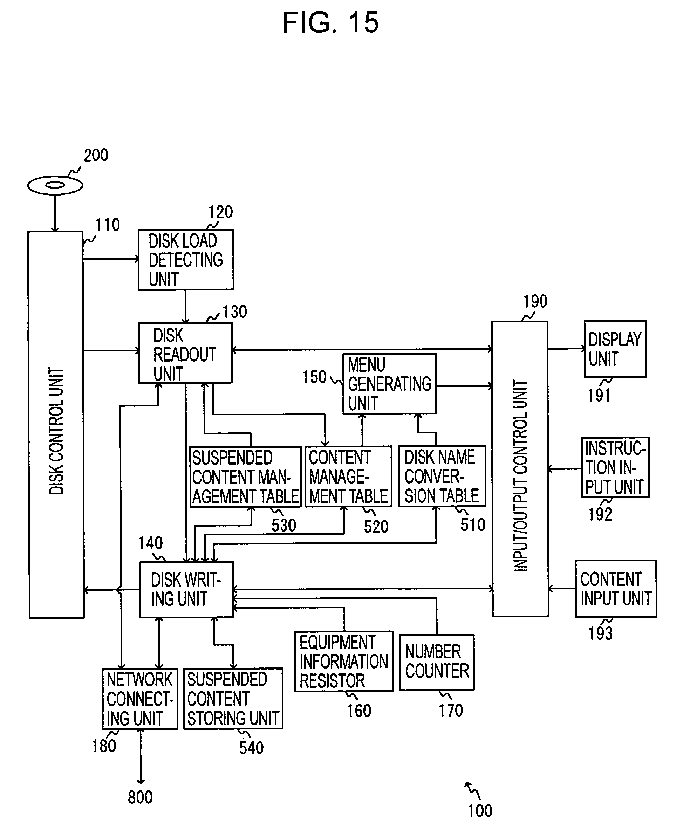

Fig. 15 illustrates another example structure of the disk managing apparatus 100 according to this embodiment of the present invention. The difference from the example structure in Fig. 1 is that a network connecting unit 180 is added to this disk managing apparatus 100. The network connecting unit 180 connects the disk managing apparatus 100 and a network 800 and allows data to be transferred between other disk managing apparatuses connected to the network 800 in a similar manner.

In this example structure, if an assigned content item is instructed to be played but the disk recording the content item is not loaded, the disk readout unit 130 inquires other disk managing apparatuses on the network 800 and, if a disk managing apparatus having the disk loaded exists, requests the content item to be transmitted. When a new disk is loaded but a suspended content item corresponding to the disk does not exist in the disk managing apparatus, the disk readout unit 130 inquires other disk managing apparatuses on the network 800 and requests the suspended content item to be transmitted if the suspended content item exists on any other disk managing apparatus.

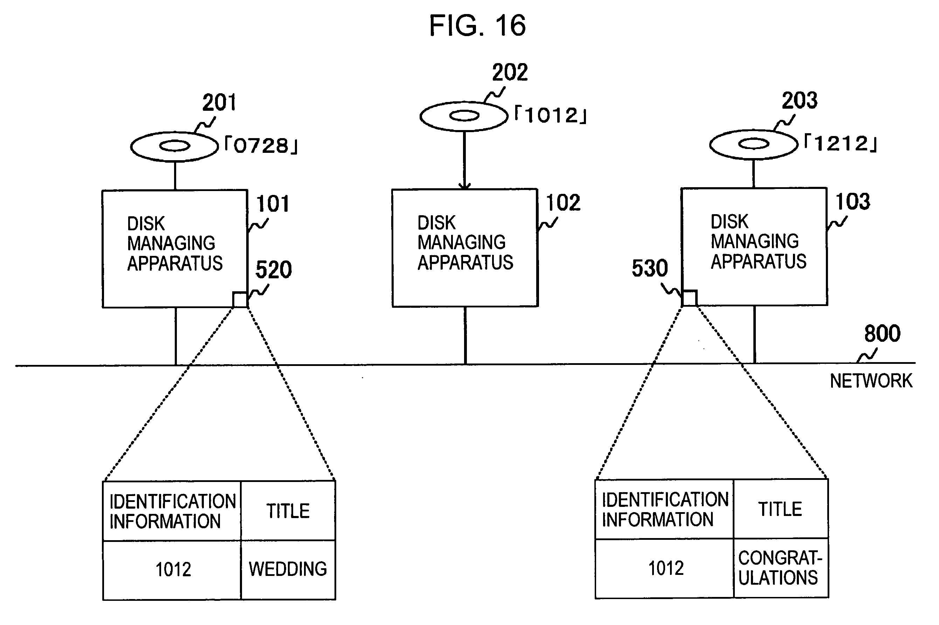

Fig. 16 illustrates an example system configuration for the disk management apparatus 100 according to another structure of this embodiment of the present invention. In this example system configuration, a disk managing apparatuses 101 to 103 are connected to the network 800. In the content management table 520 of the disk managing apparatus 101, a title "WEDDING" is stored as the attribute information of the content of the disk identification information "1012." In the suspended-content management table 530 of the disk managing apparatus 103, a title "CONGRATULATIONS" is stored as the attribute information of the suspended content item whose recording destination is the disk identification information "1012." A disk corresponding to disk identification information "0728" is loaded into the disk managing apparatus 101, and a disk corresponding to disk identification information "1212" is loaded into the disk managing apparatus 103.

When a new disk corresponding to the disk identification information "1012" is loaded into the disk managing apparatus 102, the disk identification information "1012" is notified to other disk managing apparatuses. In response, since the disk managing apparatus 103 detects the attribute information of the suspended content item whose recording destination is the disk identification information "1012" in the suspended-content management table 530, the existence of this suspended content item is transmitted to the disk managing apparatus 102. In this way, on the disk managing apparatus 102, a message something like "The content item "CONGRATULATIONS" to be recorded on the currently loaded disk is recorded in the disk managing apparatus 103. Do you want to transfer and record this content item on the disk?" will be displayed. If, in response to this message, the user instructs the recording, the disk managing apparatus 102 sends a request for transmitting the suspended content item to the disk managing apparatus 103. Then, when the disk managing apparatus 102 receives the suspended content item, the suspended content item is recorded on the disk with the disk identification information "1212."

When the content item titled "WEDDING" is played by the disk managing apparatus 101 when the disk with the disk identification information "1012" is loaded into the disk managing apparatus 102, the disk identification information "1012" of the content item is notified to the other disk managing apparatuses. In response, since the disk managing apparatus 102 detects the disk identification information "1012" from the loaded disk, the existence of this suspended content item is transmitted to the disk managing apparatus 101. In this way, on the disk managing apparatus 101, a message something like "The disk including the content item "WEDDING" is loaded into the disk managing apparatus 102" will be displayed. In this way, the user can easily confirm the location of the disk.

If the user instructs the content item titled "WEDDING," whose location is confirmed, to be played, the disk managing apparatus 101 sends a request for transmitting the content item to the disk managing apparatus 102. The disk managing apparatus 101 receives the content item from the disk managing apparatus 102 and plays this content item.

Next, the operation of a variation of the disk managing apparatus 100 according to this embodiment of the present invention will be described with reference to the drawings.

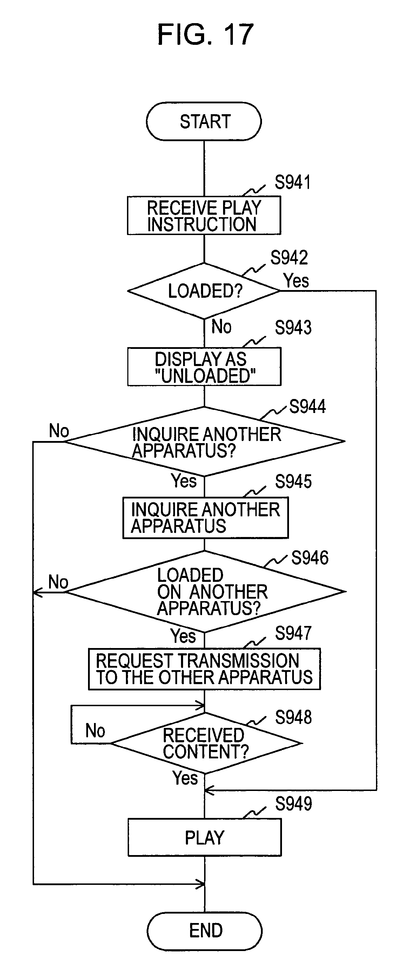

Fig. 17 illustrates an example process corresponding to an instruction for playing a content item for a variation according to this embodiment of the present invention. First, when the instruction input unit 192 instructs the playing of an assigned content item (Step S941), the content management table 520 is searched and it is determined whether or not the disk identified by the disk identification information 521 is loaded (Step S942). If, in Step S942, it is determined that a disk recording the assigned content item is loaded, the assigned content item is read out from the disk and played (Step S949).

If, in Step S942, it is determined that the disk recording the assigned content item is not loaded, a message indicating that the disk of interest is not loaded is displayed (Step S943). In response to this message, if an instruction for confirming the location of the disk in other disk managing apparatus is made (Step S944), the disk identification information of the disk recording the assigned content item is notified to the other disk managing apparatuses via the network connecting unit 180 (Step S945).

If the disk of interest is loaded into another disk managing apparatus (Step S946), a request for transmitting the content item is sent to this other disk managing apparatus (Step S947). In this way, when the content item is received (Step S948), this assigned content item is played (Step S949).

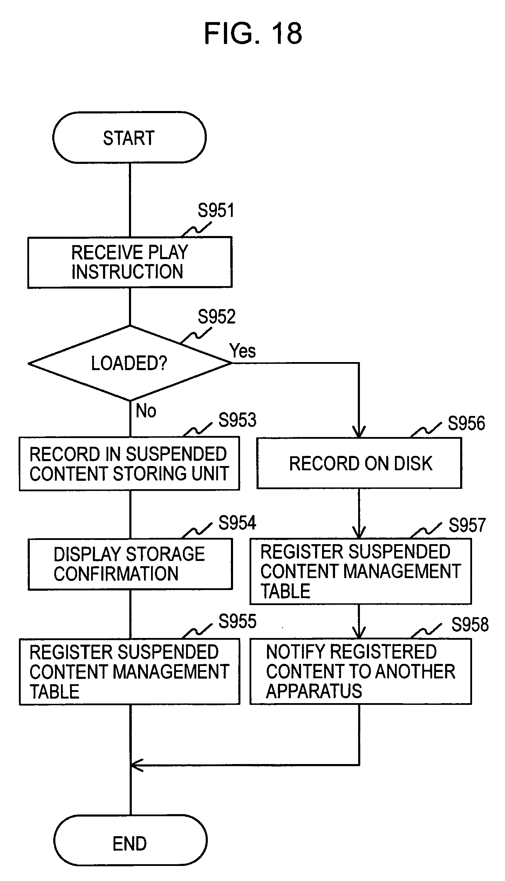

Fig. 18 illustrates an example process corresponding to an instruction recording the content item for a variation according to this embodiment of the present invention. First, when the instruction input unit 192 instructs the recording of a content item (Step S951), it is determined whether or not a disk is loaded into the disk managing apparatus 100 (Step S952).

If, in Step S952, it is determined that a disk is loaded, the content item input from the content input unit 193 is recorded on the disk (Step S956). Then, the attribute information related to this content item is recorded as the attribute information 522 in the content management table 520 together with the disk identification information 521 (Step S957). The content item recorded in the content management table 520 is notified to other disk managing apparatuses via the network connecting unit 180 (Step S958). In this way, the content items of the content management tables 520 of the disk managing apparatuses are controlled so they match each other.

If, in Step S952, it is determined that a disk is not loaded, the content item input from the content input unit 193 is recorded in the suspended-content storing unit 540 (Step S953). The suspended-content storing unit 540 may be the suspended-content storing unit 540 in the disk managing apparatus 100 where the content item is input or may be the suspended-content storing unit 540 in another disk managing apparatus connected to the network 800. For the latter suspended-content storing unit 540, this other disk managing apparatus functions as a server for storing the suspended content item. Then, at about the same timing, a message promoting the input of the disk identification information of the recording destination disk is displayed on the display unit 191 (Step S954). Disk identification information input in such a manner is recorded as the disk identification information 531 in the suspended-content management table 530 of the disk managing apparatus including the suspended-content storing unit 540 recording the suspended content item together with the attribute information 532 and the content storage information 536 (Step S955).

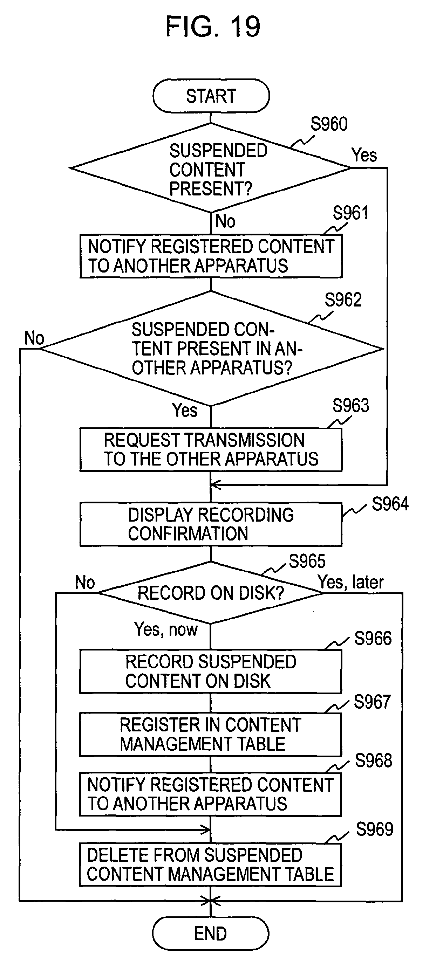

Fig. 19 illustrates an example process for recording a content item according to the variation according to this embodiment of the present invention. First, when the disk-load detecting unit 120 detects that a new disk 200 is loaded, the disk identification information 214 is read out from the disk 200 and the suspended-content management table 530 is searched on the basis of the disk identification information 214. In other words, it is determined whether or not a suspended content item whose recording destination disk is the disk identified by the disk identification information 214 is stored in the suspended-content storing unit 540 (Step S960). If it is determined that the suspended content item is stored, a message, such as that shown in Fig. 10, for confirming the recording to the recording destination disk is displayed on the display unit 191 (Step S964).

If, in Step S960, it is determined that the suspended content item is not stored, the disk identification information 214 of the loaded disk is notified to other disk managing apparatuses connected via the network connecting unit 180 (Step S961). In this way, when the suspended content item whose recording destination is the loaded disk is detected at other disk managing apparatuses (Step S962), a transmission request for the suspended content item is sent to this other disk managing apparatus (Step S963). A confirmation message for recording the suspended content item stored in this other disk managing apparatus on the recording destination disk is displayed on the display unit 191 (Step S964).

If, in Step S964, it is confirmed that the suspended content item is to be immediately recorded on the recording destination disk (Step S965), the suspended content item is recorded on the recording destination disk (Step S966). Attribute information related to this recorded content item is recorded as the attribute information 522 in the content management table 520 together with the disk identification information 521 (Step S967). The content recorded in this content management table 520 is notified to the other disk managing apparatuses via the network connecting unit 180 (Step S968). In this way, the contents of the content management tables 520 of the disk managing apparatuses are controlled so they match each other.

When the recording on the recording destination disk is completed or when it is confirmed that the content item is not to be recorded on the disk and is discarded, the suspension information related to the corresponding suspended content item is deleted from the suspended-content management table 530 (Step S969).

If, in Step S965, it is confirmed that recording is to be carried out later, the processing for Steps S966 to S969 are suspended and are executed at a predetermined timing. This timing may be, as described above, when programmed recording using the above-mentioned EPG is not scheduled or, in case for a portable disk managing apparatus, when the battery is charged.

In this way, according to the variation according to this embodiment of the present invention, disks loaded in other disk managing apparatuses and the suspended-content storing unit 540 can be used by connecting the disk managing apparatuses to the network 800 via the network connecting unit 180.

This embodiment of the present invention is described as examples for realizing the present invention, and, as discussed below, the specific elements disclosed in an embodiment of the present invention and the features of the claims have specific correspondence between each other. However, the embodiment is not limited, and a number of variations of the embodiment may be provided within the scope of the present invention.

More specifically, in Claim 1, a first area corresponds to, for example, the recording flag 213 in the identification information area 212. Recording information corresponds to, for example, a recording flag. Recording medium supplying means corresponds to, for example, the disk readout unit 130. Identification information supplying means corresponds to, for example, the equipment information register 160, the number counter 170, or the instruction input unit 192. A second area corresponds to, for example, the disk identification information 214 in the identification information area 212. Recording medium writing means corresponds to, for example, the disk writing unit 140. Management information storing means corresponds to, for example, the content management table 520. A third area corresponds to, for example, the data area 220. Management information corresponds to, for example, the pair of the disk identification information 521 and the attribute information 522 in the content management table 520.

In Claim 2, apparatus information storing means corresponds to, for example, the equipment information register 160. Counting means corresponds to, for example, the number counter 170.

In Claim 3, character string inputting means corresponds to, for example, the instruction input unit 192.

In Claim 4, an index file corresponds to, for example, the index file 310.

In Claim 5, menu generating means corresponds to, for example, the menu generating unit 150.

In Claim 6, character string inputting means corresponds to, for example, the instruction input unit 192. Name conversion information storing means corresponds to, for example, the disk-name conversion table 510. Name conversion information storing means corresponds to, for example, the pair of the disk identification information 511 and the disk name 512 in the disk-name conversion table 510.

In Claim 7, instruction inputting means corresponds to, for example, the instruction input unit 192.

In Claim 8, network connecting means corresponds to, for example, the network connecting unit 180.

In Claim 9, content-supplying means corresponds to, for example, the content input unit 193. Suspended-content-storing means corresponds to, for example, the suspended-content storing unit 540. Suspended-content-storing means corresponds to, for example, the suspended-content management table 530. Suspended-content-storing means corresponds to, for example, the pair of the disk identification information 531 and the attribute information 532 in the suspended-content management table 530 and the content storage information 536.

In Claims 12 and 16, management information storing means, corresponds to, for example, the content management table 520. A step of reading recording information from a first area on a recording medium corresponds to, for example, Step S901. A step of receiving supplied identification information when recording information indicates that a second area is not used for recording corresponds to, for example, Step S903. A step of writing supplied identification information in a second area and writing recording information indicating that a second area is used for recording in a first area corresponds to, for example, Steps 904 and S905. A step of updating management information of management information storing means by reading out identification information from a second area and reading out attribute information from a third area on a recording medium when recording information indicates that a second area is used for recording corresponds to the process carried out at the disk readout unit 130.

In Claims 13 and 17, management information storing means corresponds to, for example, the content management table 520. Suspended-content-storing means corresponds to, for example, the suspended-content storing unit 540. Suspension information storing means corresponds to, for example, the suspended-content management table 530. A step of reading out recording information from a first area on a recording medium corresponds to Step S901. A step of receiving supplied identification information when recording information indicates that a second area is not used for recording corresponds to, for example, Step S903. A step of writing supplied identification information in a second area and writing recording information indicating that a second area is used for recording in a first area corresponds to, for example, Steps 904 and S905. A step of receiving an instruction for recording a content item to an assigned recording medium corresponds to Step S921. A step of storing a content item instructed to be recorded to suspended-content-storing means and updating suspension information of suspension information storing means when an assigned recording medium is not loaded corresponds to, for example, Steps S923 and S925.

In Claim 14, a step of reading out identification information from a second area of a loaded recording medium and a step of detecting suspension information including readout identification information from suspension information storing means correspond to, for example, Step S930. A step of recording a suspended content item to suspended-content-storing means on the basis of attribute information included in detected suspension information and updating management information of management information storing means corresponds to, for example, Steps S936 and S937.

In Claim 15, a step of reading out identification information from a second area of a loaded recording medium corresponds, for example, to Step S960. A step of inquiring another recording medium managing apparatus whether or not this other recording medium managing apparatus stores suspension information including identification information read out from a second area corresponds to, for example, Step S961. A step of requesting the other recording medium managing apparatus to send suspended content item related to suspension information if suspension information is stored by the other recording medium managing apparatus corresponds to, for example, Steps S962 and S963. A step of recording a suspended content item sent from the other recording medium managing apparatus on a loaded recording medium and updating management information of management information storing means correspond to, for example, Steps S966 and S967.

These steps described in the embodiment of the present invention may be considered as a method including these steps or may be considered as a program or a recording medium for recording the program for instructing a computer to execute these steps.

### Industrial Applicability

The present invention has an excellent advantage in that identification information for identifying recording medium can be assigned only once to an area for recording a regular signal and content item on the recording medium using this identification information can be managed.

The present invention may be applied, for example, when carrying out unified management of content items recorded on a disk.

## Claims

1. A recording medium managing apparatus comprising:
recording medium readout means for reading out recording information from a first area on a loaded recording medium;
identification information supplying means for supplying identification information;
recording medium writing means for prohibiting writing the identification information in a second area on the recording medium when first recording information indicates that the second area is used for recording and for writing the identification information in the second area and writing second recording information indicating that the second area is used for recording in the first area when the first recording information indicates that the second area is not used for recording; and
management information storing means for storing management information linking identification information recorded in the second area and attribute information for content items of the recording medium recording the identification information, wherein
the recording medium readout means updates management information of the management information storing means by reading out the identification information from the second area and reading out the attribute information from a third area on the recording medium when the recording information indicates that the second area is used for recording.

2. The recording medium managing apparatus according to Claim 1, wherein,
the identification information supplying means includes apparatus information storing means for storing apparatus information unique to the recording medium managing apparatus and counting means for generating a unique serial number at the recording medium managing apparatus, and
at least part of the identification information includes the apparatus information and the serial number.

3. The recording medium managing apparatus according to Claim 1, wherein,
the identification information supplying means includes character string inputting means for inputting a predetermined character string, and
at least part of the identification information includes the character string input by the character string inputting means.

4. The recording medium managing apparatus according to Claim 1, wherein,
the third area on the recording medium stores an index file including the attribute information, and
the recording medium readout means reads out the attribute information from the index file and updates the management information of the management information storing means.

5. The recording medium managing apparatus according to Claim 1, further comprising:
menu generating means for generating a menu displaying the attribute information of content items of the recording medium on the basis of the management information stored in the management information storing means.

6. The recording medium managing apparatus according to Claim 5, further comprising:
character string inputting means for inputting a predetermined character string; and
name conversion information storing means for storing name conversion information linking the identification information and a character string input by the character string inputting means, wherein,
the recording medium writing means updates the name conversion information of the name conversion information storing means when writing the identification information in the second area, and
the menu generating means displays a character string together with the attribute information, the character string being linked to the identification information of the recording medium by the name conversion information.

7. The recording medium managing apparatus according to Claim 5, further comprising:
instruction inputting means for assigning the content item to be played using the menu,
wherein the recording medium readout means reads out the content item if the recording medium storing the assigned content item is loaded.

8. The recording medium managing apparatus according to Claim 7, further comprising:
network connecting means for communicating with a network connecting another recording medium managing apparatus,
wherein, if the recording medium storing the assigned content items is not loaded, the recording medium readout means inquires the other recording medium managing apparatus through the network connecting means whether or not the recording medium is loaded and, if the recording medium is loaded into the other recording medium managing apparatus, the recording medium readout means requests the transmission of the assigned content item.

9. The recording medium managing apparatus according to Claim 1, further comprising:
content-supplying means for supplying a content item;
suspended-content-storing means for storing a content item suspended from being written in a recording medium; and
suspension information storing means for storing suspension information linking identification information of a recording medium that is the recording destination of the suspended content item and attribute information of the suspended content item,
wherein, if the recording medium that is the recording destination of the content item supplied from the content-supplying means is not loaded, the recording medium writing means stores the supplied content item in the suspended-content-storing means and updates the suspension information of the suspension information storing means.

10. The recording medium managing apparatus according to Claim 9, wherein
the recording medium readout means detects suspension information including the identification information read out from the second area from the suspension information storing means, and
the recording medium writing means records the suspended content item stored in the suspended-content-storing means on the recording medium on the basis of the attribute information included in the detected suspension information and updates the management information of the management information storing means.

11. The recording medium managing apparatus according to Claim 10, further comprising:
network connecting means for communicating with a network connecting another recording medium managing apparatus,
wherein
the recording medium readout means inquires the other recording medium managing apparatus through the network connecting means whether or not the other recording medium managing apparatus stores the suspension information including the identification information read out from the second area and, if the suspension information is stored in the other recording medium managing apparatus, requests the transmission of the suspended content item related to the suspension information to the other recording medium managing apparatus, and
the recording medium writing means records the suspended content item transmitted from the other recording medium managing apparatus or the recording medium and updates the management information of the management information storing means.

12. A method of managing a recording medium for a recording medium managing apparatus including management information storing means for storing management information linking identification information and attribute information of content items of a recording medium recording the identification information, the method comprising the steps of:
reading out recording information from a first area on a recording medium;
receiving supplied identification information when the recording information indicates that the second area is not used for recording;
writing the supplied identification information in the second area and writing recording information indicating that the second area is used for recording in the first area; and
updating the management information of the management information storing means by reading out the identification information from the second area and reading out the attribute information from a third area on the recording medium when the recording information indicates that the second area is used for recording.

13. A method of managing a recording medium for a recording medium managing apparatus including management information storing means for storing management information linking identification information and attribute information of content items of a recording medium recording the identification information, suspended-content-storing means for storing a content item suspended from being written in a recording medium, and suspension information storing means for storing suspension information linking the identification information of a recording medium that is the recording destination of the suspended content item and the attribute information of the suspended content item, the method comprising the steps of:
reading out first recording information from a first area on the recording medium;
receiving supplied identification information when the first recording information indicates that the second area is not used for recording;
writing the supplied identification information in the second area and writing second recording information indicating that the second area is used for recording in the first area;
receiving a instruction for recording a content item on an assigned recording medium; and
storing the content item instructed to be recorded in the suspended-content-storing means and updating the suspension information of the suspension information storing means when the assigned recording medium is not loaded.

14. The method of managing a recording medium according to Claim 13, the method further comprising the steps of:
reading out the identification information from the second area of a loaded recording medium;
detecting the suspension information including the read out identification information from the suspension information storing means; and
recording the suspended content item stored in the suspended-content-storing means on the recording medium on the basis of the attribute information including the detected suspension information and updating the management information of the management information storing means.

15. The method of managing a recording medium according to Claim 13, the method further comprising the steps of:
reading out the identification information from the second area of the loaded recording medium;
inquiring another recording medium management apparatus whether or not the other recording medium management apparatus stores the suspension information including the identification information read out from the second area;
requesting the transmission of the suspended content item related to the suspension information to the other recording medium management apparatus if the suspension information is stored in the other recording medium management apparatus; and
recording the suspended content item sent from the other recording medium management apparatus on the loaded recording medium and updating the management information of the management information storing means.

16. A program for a recording medium managing apparatus including management information storing means for storing management information linking identification information and attribute information of content items of a recording medium recording the identification information, the program instructing a computer to execute the steps of:
reading out first recording information from a first area on a recording medium;
receiving supplied identification information if the first recording information indicates that the second area is not used for recording;
writing the supplied identification information in the second area and writing second recording information indicating that the second area is used for recording in the first area; and
updating the management information of the management information storing means by reading out the identification information from the second area and reading out the attribute information from a third area on the recording medium when the first recording information indicates that the second area is used for recording.

17. A program for a recording medium managing apparatus including management information storing means for storing management information linking identification information and attribute information of content items of a recording medium recording the identification information, suspended-content-storing means for storing a content item suspended from being written in a recording medium, and suspension information storing means for storing suspension information linking identification information of a recording medium that is the recording destination of the suspended content item and attribute information of the suspended content item, the program instructing a computer to execute the steps of:
reading out first recording information from a first area on a recording medium;
receiving supplied identification information when the first recording information indicates that the second area is not used for recording;
writing in the supplied identification information in the second area and writing in second recording information indicating that the second area is used for recording in the first area;
receiving an instruction of recording a content item to an assigned recording medium; and
storing the content item instructed to be recorded in the suspended content item storing means and updating the suspension information of the suspension information storing means when the assigned recording medium is not loaded.
